# EUROPEAN PATENT SPECIFICATION

(11) **EP 1 504 451 B1**
(45) Date of publication and mention of the grant of the patent: **15.04.2009**
(21) Application number: 03720604.2
(22) Date of filing: 22.04.2003
(51) Int. Cl.: G11B 23/50, B08B 3/00

(54) **A CLEANING DEVICE FOR A DISC**
REINIGUNGSEINRICHTUNG FÜR EINEN DATENTRÄGER
DISPOSITIF DE NETTOYAGE D'UN DISQUE

(30) Priority: 22.04.2002 FI 20020766
(43) Date of publication of application: 09.02.2005
(73) Proprietor: Hänninen, Jouni, 00170 Helsinki (FI)
(72) Inventor: Hänninen, Jouni, 00170 Helsinki (FI)
(74) Representative: Nieminen, Taisto Tapani
(86) International application number: PCT/FI2003/000316
(87) International publication number: WO 2003/090227

(56) References cited:
- FR-A1- 2 644 439
- GB-A- 2 371 141
- US-A- 4 713 856
- US-A- 5 944 180

## Description

The invention relates to a cleaning device for a disc, as a cleaning device for CD and DVD discs, by means of which device a disc can be quickly cleaned.

Previously known as record cleaners are, among other things, a cleaning felt or similar ones, which can be pressed against the surface of a rotating record. The felts are moistened with detergent suitable for record cleaning. A cleaning process of such kind is not suited for CD or DVD discs, since they cannot in the driving stations designed for them be rotated so that the disc surface would be visible. That's why for cleaning of discs a rotating station should be built, where the disc would be visible on rotation.

A separate cleaning station to rotate the disc is complicated to build for simple wiping or washing, the need of which is quite small. However, there will be fingerprints and stains left on the discs, which may have effect on disc behaviour.

For easy cleaning of these discs a new kind of cleaner/washer has been developed that needs no turning gear, since the disc can be rotated from its outer edge by hand without leaving any fingerprints on the disc surface. The body of the cleaner as per this invention is most suitably comprised of two or three parts attached to each other and the cleaner is **characterized in that** the parts can be mutually closed and opened facing each other and that one of them has a nest assembly partly receiving the disc and another part has an attachment assembly for the wiping/washing means, whereby, with these parts being closed facing each other, the wiper/washing cleaner is pressed against the disc in the nest.

The advantage of the invention is the easy-of-use and rapidity of the cleaner. The fluid detergent is kept in a separate bottle, from which it can be refilled in portions into the washing means. The cleaner is easy to produce, for instance of plastic, whereby both body parts or all parts of the cleaner are by means of a plastic hinge fastened to each other. The cleaner is easy to use, since when the cleaner is closed it is held by one hand, while the disc is rotated and pressed against the disc from its edge by the other hand without touching the disc surface.

Wetting the wiping sponge is easy and in one embodiment the sponge function can be made more effective simply by squeezing the sponge by means of a flexible cover. Because the sponge and the felt on it are together normally of a size already slightly bigger than the space reserved for the m in the cleaner, the sponge gets controllably pressed by proper force against the disc, when the cleaner is closed during washing. The disc is not rotated during the washing motion but rotation is necessary only for getting the disc against the next sector. The washing motion is a pressing motion in the direction of the disc radius, whereby the motion of the sponge with respect to the disc is parallel with the radius.

In the following the invention is disclosed with reference to the drawing, where
Fig. 1 shows a disc placed in the cleaner viewed from the front.
Fig. 2 shows a disc placed in the cleaner viewed from the opposite side.
Fig. 3 shows a disc placed in the cleaner viewed from the end.
Fig. 4 shows the cleaner open, viewed diagonally from the sponge and disc nest side.
Fig. 5 shows the cleaner open, viewed from the side of accessories.

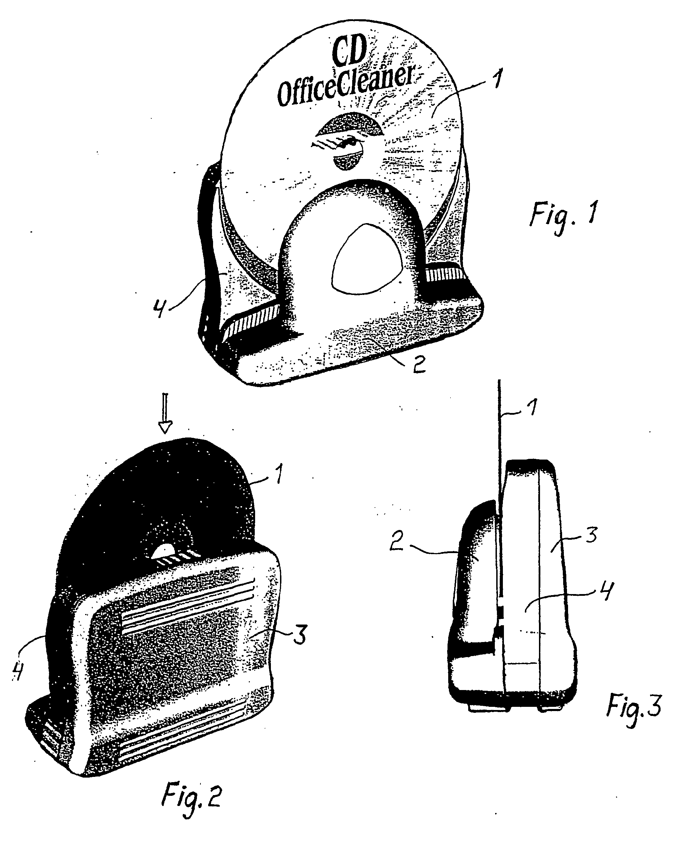

Figure 1 shows a cleaner most suitably cast of plastic, the body of which comprises a first side part 2 and a disc 1 and on the opposite side a second side part 2. Further, between these side parts there is a central part 4. All these three parts 2,3,4 are combined by a hinged joint 10 arranged in the lower edge of the cleaner so that the first part 2 and the second part 3 can both be turned open, while centre part 4 remains in place. So that parts 2 and 3 would remain face to face with the centre part pressed against each other, there is between parts 2 and 4 and 3 and 4 a locking system, which is most suitably a usually utilized tension of a small part in one piece to give necessary hold behind the other piece.

In the solution of figures 1,2,3 the centre part 4 has a disc nest 7, into which disc 1 fits only by halves. For rotating the disc by hand it is advantageous that less than the half of the disc circle is in nest 7. A proper portion is maybe about 35 - 45 %. Turning the disc takes place rotating it from its outer edge by hand.

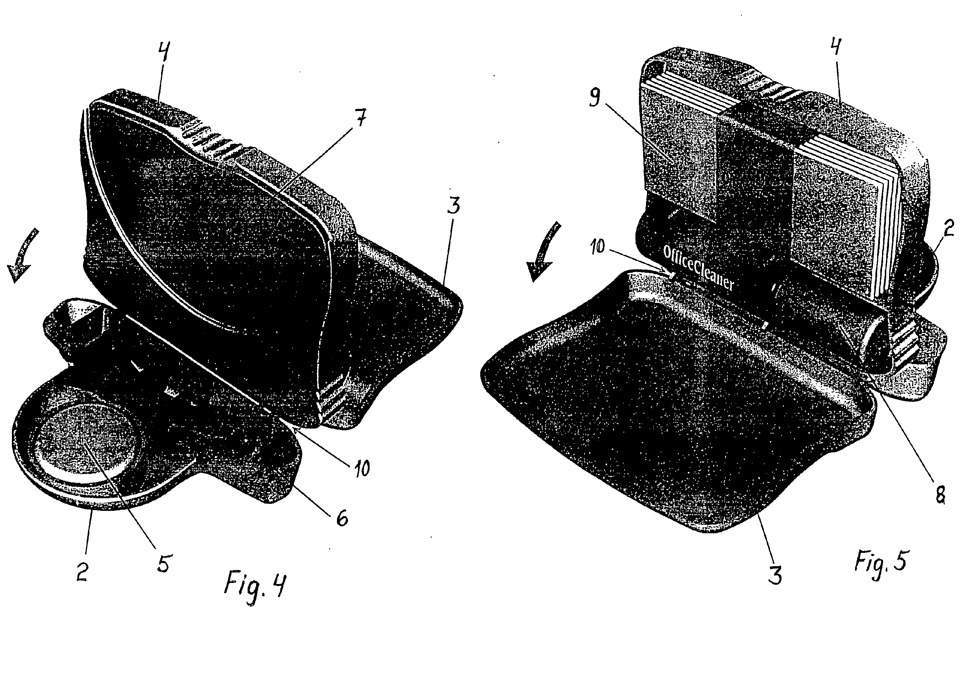

Figure 4 shows the cleaner open, whereby first part 2 includes washing/wiping means 5 placed in a groove designed for them. The washing means are for instance a sponge, the upper surface of which facing the disc is a felt or similar soft material. Further, a spring device 6 is fitted to and turning with part 2 that in the cleaner operating state works as a flexible stopper of disc 1, when disc 1 is pushed into nest 7. The spring has an arched portion towards the disc. The disc edge meets the arched portion and still pushing the disc into the nest the spring devise 6 retreats and, further, the spring devise returns the disc a little. Thanks to spring device 6 it is possible to carry out pumping motion in order to improve the washing result. By the pumping motion the sponge moves in the direction of the radius with respect to the disc, and that is the optimal direction of motion.

The wiping/washing means 5 are, for instance, a liquid-absorbing sponge dimensioned a little bigger than its mounting hole/cylinder. The sponge contacting surface against the disc is of soft material, as felt, fleece, non-woven fabric or similar. The washing means can also be, for instance, a rectangular wiper. The sponge can also be a permanent sponge, whereby in its inside a smallish detergent store has been arranged, from which more detergent is freed by pressing. The detergent to be used is a quite dilute agent suitable for removal of fat.

For washing the disc is placed in nest 7, the bottom of which is covered with smooth fleece fabric or similar, on the disc surface, which is to be cleansed, detergent is sprayed most advantageously over the whole area, which does not in any way damage the disc, as for instance, spreading of detergent by wiping. The cleaner is closed, whereby the sponge an felt combination presses the disc by ,proper force. Due to the cleaner construction the pressing force of sponge cannot get too strong. Then in the nest the disc is rotated sector by sector and by each sector washing motion, i.e. pumping, is carried out with the disc against spring device 6. In this way of washing the disc gets clean and is also dry when taken out from the nest.

One possibility is also that the detergent comes to the disc through the sponge and felt, whereby they are handled with detergent or detergent is bubbling from them on the disc. In this way the deter gent hardly has time to have any effect on the stains in the disc and the disc is also still wet when taken out from the cleaner.

The cover part of part 2, corresponding to mounting nest 4 of the wiping/washing means 5, can be made thin and flexible, so that on pressing the cover part yields and squeezes sponge 5 and also returns by itself Then feed of detergent to the disc can be intensified, if detergent comes through the sponge.

The cleaner can also include as extra embodiment, figure 5, that the cleaner is divided into three parts 2,3,4. Then part 3 is also a separate cover that can be opened, which when opened, allows access to the accessory space. The accessory space is partly on the inside of both parts 4 and 3. In figure 5 a detergent container 8 and a pack of towels 9 are shown placed in the accessory space. With this solution the cleaner becomes versatile, since with its washing means it is possible to clean, for instance, the spectacles and the monitor pane.

The shape of the cleaner is freely variable. The cleaner can also be a two-sided disc cleaner, whereby both disc sides get clean at the same time, if necessary. Of course, many variations of the invention are possible, and thus the invention is not restricted only to the above presented embodiments.

## Claims

1. A disc (1) cleaner, the body of which is formed of two or several parts (2),(3),(4), attached to each other, which can be mutually closed and opened facing each other and one part (4) of the parts comprising a nest assembly (7) partly receiving the disc (1), and another part (2) of the parts comprising an attachment assembly of a wiping and washing means (5), whereby, with said parts closed facing each other, the washing means (5) nestle against the disc (1) in nest (7),
**characterized in that** the nest (7) has a spring device (6) rejecting partly the disc (1) pushed into the nest, when by means of the disc (1) a pumping motion is carried out towards the nest, when the cleaning takes place.

2. A cleaner according to claim 1, **characterized in that** the cleaner comprises a part (3), which can be opened and closed and forms with another part (4) an accessory space for washing means (8);(9).

3. A cleaner according to claim 1, c**haracterized in that** disc (1) can be rotated in nest (7).

4. A cleaner according to claim 1, **characterized in that** washing means (5) form a flexible, the disc not-damaging contact piece, as a sponge, the contact surface of which is a felt.

5. A cleaner according to claim 1, **characterized in that** clip nest (7) is dimensioned so that it covers less than half of the disc outer edge.

6. A cleaner according to claim 1, **characterized in that** washing means (5) in the attachment assembly can be squeezed by means of the flexible cover of body (2).

## Patentansprüche

1. Ein Disketten (1)-Reiniger, dessen Körper aus zwei oder mehrere Teile (2), (3), (4), die miteinander befestigt sind, geformt ist, welche Teile gegenseitig geschlossen und geöffnet werden können, wenn sie einander gegenüber sind und ein Teil (4) von den Teilen weist eine Neststruktur (7), die die Diskette (1) zum Teil entgegennimmt, auf und ein zweiter Teil (2) von den Teilen weist eine Befestigungsstruktur des Wisch- und Reinigungsmittels (5) auf, wobei, wenn die genannten Teile einander gegenüber geschlossen sind, das Reiningungsmittel (5) sich gegen die Diskette (1) im Nest (7) druckt, **dadurch gekennzeichnet, dass** das Nest (7) eine Springvorrichtung (6) hat, die die Diskette, die in das Nest eingeschoben ist, (1) teilweise abweist, wenn mit Hilfe der Diskette (1) eine pumpende bewegung beim Reinigungsprozess gegen das Nest durchgeführt ist.

2. Ein Reiniger nach Anspruch 1, **dadurch gekennzeichnet, dass** der Reiniger einen Teil (3), der geöffnet und geschlossen werden kann, aufweist und welcher Teil mit einem anderen Teil (4) einen Ausrüstungsraum für Reinigungsmittel (8); (9) formt.

3. Ein Reiniger nach Anspruch 1, **dadurch gekennzeichnet, dass** die Diskette (1) im Nest (7) rotiert werden kann.

4. Ein Reiniger nach Anspruch 1, **dadurch gekennzeichnet, dass** das Reinigungsmittel (5) ein flexibles Kontaktstück, das die Diskette nicht beschädigt, ist, wie zum Beispiel ein Schwamm, dessen Kontaktfläche ein Filz ist.

5. Ein Reiniger nach Anspruch 1, **dadurch gekennzeichnet, dass** das Diskettennest (7) so dimensioniert ist, dass es weniger als eine Hälfte des Umkreises der Diskette bedeckt.

6. Ein Reiniger nach Anspruch 1, **dadurch gekennzeichnet, dass** das Reinigungsmittel (5), das sich in der Befestigungsstruktur befindet, mit Hilfe der flexibelen Abdeckung des Körpers (2) gepresst werden kann.

## Revendications

1. Un nettoyeur de disque (1), le corps duquel est formé de deux ou de plusieurs parties (2), (3), (4) fixées l'une à l'autre et qui peuvent être mutuellement fermées et ouvertes, l'une (4) des parties comprenant un ensemble réceptacle (7) recevant partiellement le disque (1) et l'autre partie (2) comprenant un ensemble de fixation pour le moyen d'essuyage et de nettoyage (5), ce qui permet, lorsque les deux parties sont fermées l'une contre l'autre, au moyen de nettoyage (5) se trouvant à l'intérieur du réceptacle (7) de s'appuyer contre le disque (1), **caractérisé en ce que** le réceptacle (7) est muni d'un mécanisme ressort (6) repoussant partiellement le disque (1) placé dans le réceptacle lorsque le disque (1) effectue un mouvement de pompage vers le réceptacle pendant le nettoyage.

2. Un nettoyeur selon la revendication 1, **caractérisé en ce que** le nettoyeur comprend une partie (3) qui peut être ouverte et fermée et qui, avec une partie (4), forme un espace auxiliaire pour les moyens de nettoyage (8), (9).

3. Un nettoyeur selon la revendication 1, **caractérisé en ce qu'**il est possible de faire tourner le disque (1) dans le réceptacle.

4. Un nettoyeur selon la revendication 1, **caractérisé en ce que** les moyens de nettoyage (5) forment une pièce de contact flexible qui n'endommage pas le disque et dont la surface de contact est un feutre.

5. Un nettoyeur selon la revendication 1, **caractérisé en ce que** le réceptacle de fixation (7) est dimensionné de façon à couvrir moins qu'une moitié de la circonférence extérieure du disque.

6. Un nettoyeur selon la revendication 1, **caractérisé en ce que** les moyens de nettoyage (5) se trouvant dans l'ensemble de fixation peuvent être poussés par exemple par l'intermédiaire d'un couvercle flexible du corps (2).
